# FASCICULE DE BREVET EUROPEEN

(11) **EP 1 534 576 B1**
(45) Date de publication et mention de la délivrance du brevet: **04.01.2006**
(21) Numéro de dépôt: 03756522.3
(22) Date de dépôt: 31.07.2003
(51) Int. Cl.: B62D 6/00

(54) **VEHICULE AUTOMOBILE EQUIPE D UN SYSTEME DE COMMANDE DE DIREC TION**
KRAFTFAHRZEUG MIT EINER LENKUNGSSTEUERUNG
MOTOR VEHICLE COMPRISING A STEERING CONTROL SYSTEM

(30) Priorité: 05.09.2002 FR 0210998
(43) Date de publication de la demande: 01.06.2005
(73) Titulaire: Renault Trucks, 69800 St Priest (FR)
(72) Inventeur: DECHAMP, François, F-71250 CLUNY (FR)
(74) Mandataire: Vuillermoz, Bruno
(86) Numéro de dépôt international: PCT/FR2003/002434
(87) Numéro de publication internationale: WO 2004/022413

(56) Documents cités:
- EP-A- 1 029 772
- DE-A- 10 142 367
- DE-A- 19 845 567
- DE-U- 29 612 536
- FR-A- 1 432 986
- PATENT ABSTRACTS OF JAPAN vol. 015, no. 113 (M-1094), 18 mars 1991 (1991-03-18) -& JP 03 007677 A (MITSUBISHI), 14 janvier 1991 (1991-01-14)
- PATENT ABSTRACTS OF JAPAN vol. 1996, no. 12, 26 décembre 1996 (1996-12-26) -& JP 08 207661 A (AICHI CORP.), 13 août 1996 (1996-08-13) cité dans la demande

## Description

### Domaine technique

L'invention se rattache au domaine de l'automobile, au sens large, et peut être appliquée notamment sur des véhicules industriels mais également aux voitures particulières Elle concerne plus spécifiquement les systèmes de direction fonctionnant sans colonne de direction mécanique, mais par l'intermédiaire d'un circuit de commande électrique, électro-hydraulique ou hydraulique commandant un actionneur agissant sur l'angle de braquage des roues directrices.

Ce type de commande de direction est généralement appelé "steer by wire". L'invention vise plus précisément une amélioration des systèmes de commande "steer by wire" qui procure des améliorations en terme d'ergonomie, notamment pour le fonctionnement en marche arrière.

### Techniques antérieures

De façon générale, les systèmes "steer by wire" utilisent une information représentative de l'angle de rotation du volant pour commander de façon appropriée, par l'intermédiaire d'un circuit de puissance, des actionneurs provoquant la variation de l'angle de braquage des roues directrices. Diverses solutions, utilisant des technologiques différentes, peuvent être employées. Ainsi, ces actionneurs peuvent être commandés par un circuit totalement hydraulique dans lequel intervient une moto-pompe commandée par la rotation du volant. D'autres solutions utilisent des systèmes électro-hydrauliques. Ainsi, à partir de signaux électriques générés par des capteurs interfacés avec le volant, un ensemble de composants électro-hydrauliques tels que des électrovannes, sont commandés de façon appropriée pour alimenter les actionneurs, typiquement des vérins, responsables de la variation d'angle de braquage des roues.

D'autres solutions purement électriques assurent l'alimentation de puissance de vérins électriques également en fonction de signaux issus de capteurs interfacés avec le volant.

On observe également une tendance à l'évolution de l'architecture du poste de conduite d'un véhicule industriel dans lequel le volant est remplacé par un manipulateur pivotant. Ce manipulateur peut posséder une ou plusieurs directions d'inclinaison. Une première direction, généralement transversale, permet de commander le système de direction. Plus précisément, l'inclinaison du manipulateur d'un côté ou de l'autre d'une position neutre provoque la variation de l'angle de braquage dans le même sens.

Sur certains systèmes plus perfectionnés, qui ne sont toutefois pas obligatoires pour la mise en oeuvre de la présente invention, le manipulateur peut comporter également une deuxième direction, généralement longitudinale, permettant de commander à la fois l'accélération et le freinage du véhicule.

De façon générale, quel que soit le type d'organe de commande de la direction, c'est-à-dire volant ou manipulateur, la conduite en marche arrière requiert du conducteur une attention accrue puisque ses repères visuels sont modifiés. Ainsi, dans une voiture particulière lorsque le conducteur se retourne afin de visualiser le champ arrière du véhicule, il perd donc automatiquement la vision de son volant et il lui est donc nécessaire d'être plus particulièrement attentif à ses gestes. Cette contrainte est encore plus manifeste pour la conduite de véhicules industriels pour lesquels le champ de vision arrière n'est accessible qu'au moyen de rétroviseurs renvoyant chacun une partie du champ de vision arrière, mais avec un phénomène d'inversion par réflexion dans un miroir.

Cette vision en mode indirect, combinée avec la division du champ de vision en deux parties, et les grandes dimensions d'un véhicule industriel, nécessite un certain apprentissage pour la conduite en marche arrière.

Pour faciliter l'évolution en marche arrière, certaines solutions ont déjà été proposées, notamment celles décrites dans la demande de brevet japonais publiée sous le numéro JP 8-207 661. Cette solution consiste à utiliser une caméra disposée à l'arrière du véhicule, et capable d'acquérir le champ de vision arrière du véhicule. L'image traitée par cette caméra est ensuite affichée sur un écran disposé au niveau du pare-brise du poste de conduite, sensiblement à la manière d'un rétroviseur. L'image affichée dans cet écran a subit un traitement de renversement latéral, pour être visualisé en mode indirect. De la sorte, le conducteur a l'impression en regardant cet écran qu'il s'agit d'un rétroviseur lui permettant de voir à l'arrière de sa cabine, bien que celle-ci soit totalement obturée.

En d'autres termes, cette solution permet au conducteur de conduire tout en ayant accès au champ de vision arrière de son véhicule par un rétroviseur central, bien que ce champ de vision ne soit pas accessible depuis la cabine. Le mode de conduite en marche arrière nécessite toutefois d'inverser les commandes sur le volant par rapport aux repères visuels. Cela constitue donc un défaut d'ergonomie.

JP-03 007 677 décrit un véhicule selon le préambule de la revendication 1.

Le problème que se propose de résoudre l'invention est celui de simplifier le mode de conduite en marche arrière.

### Exposé de l'invention

L'invention concerne donc un véhicule automobile, et notamment un véhicule industriel, équipé d'un système de commande de direction du type "steer by wire". Un tel système de commande de direction comporte :
■ un organe de commande de direction du type volant ou manipulateur,
■ un actionneur agissant sur l'angle de braquage des roues directrices,
■ des moyens pour commander cet actionneur en fonction d'un signal issu de l'organe de commande de direction;
■ au niveau du poste de conduite, des moyens de visualisation en mode direct du champ de vision arrière du véhicule ;
■ des moyens de détermination du sens de marche du véhicule ;
■ des moyens pour inverser, selon le sens de marche du véhicule, le sens de braquage des roues pour un même sens de déplacement de l'organe de commande de direction.

Autrement dit, l'invention consiste à afficher dans le poste de conduite le champ arrière sans renversement, de la même manière que le verrait le conducteur s'il pouvait se retourner et voir au travers de la remorque s'il s'agit d'un camion, ou plus généralement de la partie du véhicule qui se trouve derrière le poste de conduite. De la même manière, lorsque la marche arrière est enclenchée, les commandes de direction sont inversées, c'est-à-dire qu'une rotation à droite du volant, ou une inclinaison à droite du manipulateur, produit un braquage vers la gauche des roues directrices, et inversement.

En d'autres termes, l'invention revient à retourner et déplacer virtuellement le poste de conduite à l'arrière du véhicule, puisque l'écran de visualisation affiche alors l'image en mode direct, telle qu'elle est acquise par la caméra située en arrière du véhicule, et que le volant ou le manipulateur agit de façon inversée sur les angles de braquage, comme s'il avait été retourné.

Il s'ensuit que le mode de conduite en marche arrière s'apparente à une conduite en marche avant adaptée qui ne perturbe donc pas le conducteur, puisqu'il n'a donc pas d'hésitation dans le choix de sens de rotation du volant, et que notamment il ne perçoit pas les écritures ou la signalisation de façon inversée.

Ce principe de déplacement virtuel du poste de conduite peut être mis en oeuvre avec diverses architectures de postes de conduite, et technologies du système de commande de direction. Ainsi, l'organe de commande de direction peut être soit un volant traditionnel, fonctionnant par rotation, ou bien encore un manipulateur comportant une poignée pivotante. De même, les moyens pour commander l'actionneur agissant sur l'angle de braquage peuvent inclure soit des circuits hydrauliques, soit des circuits électro-hydrauliques, ou bien encore des circuits purement électriques.

De façon générale, la commande du ou des actionneurs est généralement effectuée par un calculateur générant des ordres de commande en fonction du signal issu de l'organe de commande de direction.

En pratique, l'interversion des commandes de braquage peuvent avoir lieu de différentes manières. Ainsi, dans une première forme de réalisation, les moyens d'inversion peuvent agir sur la configuration des circuits électriques ou électro-hydrauliques commandés par calculateur. Autrement dit, les lois de commande de braquage en fonction de l'angle de rotation de l'organe de commande restent les mêmes, et c'est le circuit de puissance, situé en aval du calculateur qui est alors reconfiguré de manière à obtenir des braquages inversés.

Dans une autre forme de réalisation, les moyens d'inversion agissent sur le signal issu de l'organe de commande à direction, et acheminés au calculateur, en vue de la commande des circuits électriques ou électro-hydrauliques. En d'autres termes, c'est au sein du calculateur que le signal issu de l'organe de commande est traité de manière à être interprété comme si le volant le manipulateur avait été déplacé dans un sens inverse.

### Description sommaire des figures

La manière de réaliser l'invention, ainsi que les avantages qui en découlent ressortiront bien de la description du mode de réalisation qui suit, à l'appui des figures annexées dans lesquellés :
La figure 1 est une vue en situation montrant un véhicule industriel et son environnement arrière.
La figure 2 est une vue schématique de l'intérieur du poste de conduite.
La figure 3 est un schéma simplifié explicatif du système de direction conforme à l'invention.

### Manière de réaliser l'invention

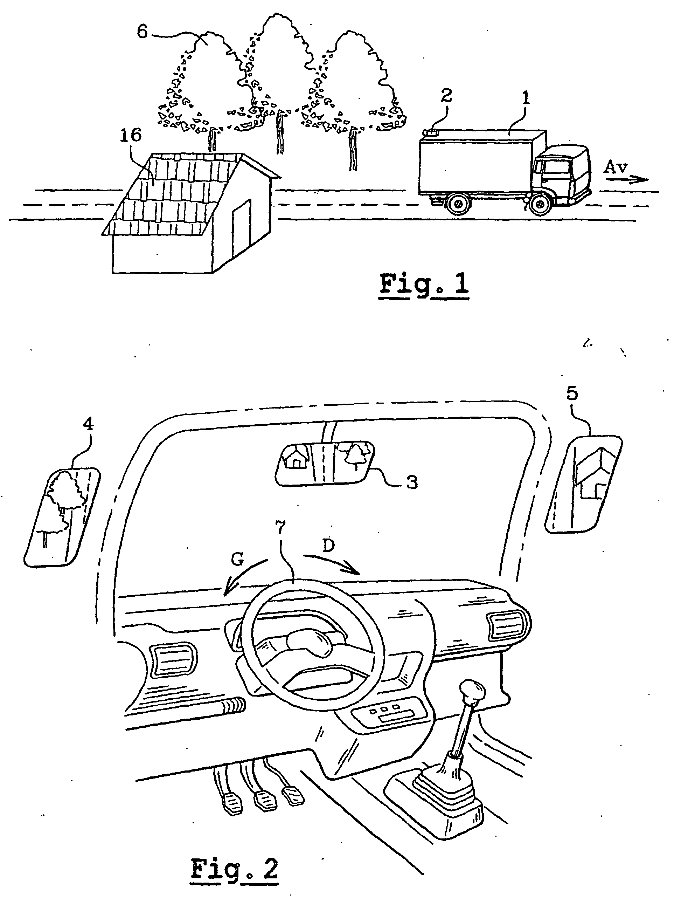

Comme illustré à la figure 1, le véhicule (1) est équipé d'une caméra (2) située par exemple à l'arrière de la remorque, et orientée pour embrasser le champ de vision arrière du véhicule. A titre d'exemple, on observe que le champ, de vision arrière, présente sur la droite, lorsque l'on regarde vers l'arrière du camion, un ensemble d'arbres (6) ; alors que du côté gauche, la route est bordée d'une habitation (16).

Cette caméra (2) et reliée par une liaison appropriée à un ou plusieurs calculateurs, par exemple localisés au niveau de la cabine.

Au sein de la cabine, l'image acquise par la caméra (2) est affichée au niveau d'un écran (3) qui peut par exemple se trouver au niveau du pare-brise, à un emplacement correspondant à celui d'un rétroviseur d'un véhicule particulier ou d'un camion dont le fond de la cabine est vitré. Bien entendu, cet écran (3) peut être disposé à beaucoup d'autres endroits sans sortir du cadre de l'invention. Il peut par exemple être situé juste derrière le volant, être escamotable éventuellement automatiquement, ou bien encore être remplacé par un système de projection projetant l'image sur une zone du pare-brise, ou de façon plus générale dans le champ de vision du conducteur, et par exemple sur la route.

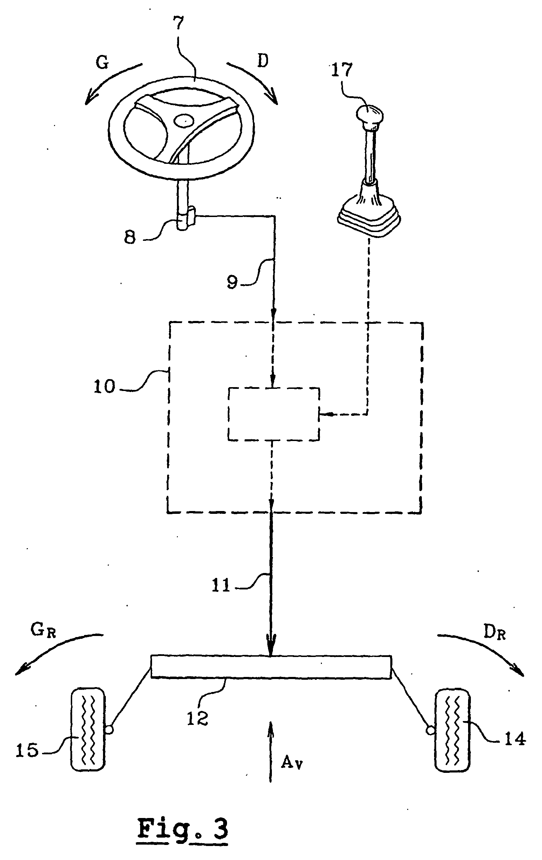

Il importe de noter que la visualisation de l'image se fait sur l'écran (3) en mode direct, c'est-à-dire sans renversement de l'image. Ainsi, dans l'exemple illustré à la figure 2, on observe que l'image affichée sur l'écran (3) ne correspond pas à ce qui peut être perçu au niveau des deux rétroviseurs (4, 5), mais est au contraire dans une configuration inversée. L'image représentée en figure 3 correspond à celle qu'aurait le conducteur s'il se plaçait au niveau de la caméra (2) en regardant à l'arrière du camion.

En pratique, cet affichage peut avoir lieu en permanence, ou bien alors uniquement lorsque le véhicule fonctionne en marche arrière.

Le système de direction conforme à l'invention combine donc à la fois le dispositif de visualisation du champ arrière, mais également une gestion particulière des ordres élaborés au niveau de l'organe de commande de direction, qui dans l'exemple illustré à la figure 2, est un volant (7).

Dans d'autres variantes équivalentes, le volant (7) peut être remplacé par un manipulateur, équipé d'une poignée dont l'inclinaison latérale dans un sens ou l'autre, produit également une commande de direction.

De façon plus précise, et comme illustré à la figure 3, l'organe de direction (7) comporte un capteur (8) qui élabore un signal représentatif de l'angle de rotation du volant (7). Ce signal (9) est acheminé à destination d'un calculateur (10) assurant la gestion de la commande de direction. Ce calculateur élabore une commande de puissance, représentée par la flèche (11) à destination de l'actionneur (12) provoquant la variation de l'angle de braquage des roues (14, 15).

Cet actionneur (12) peut être de type très varié, et notamment réalisé par des vérins hydrauliques, ou bien encore par des vérins électriques. Dans le premier cas, le circuit de commande de puissance (11) est de type électro-hydraulique, alors que dans le second cas, le circuit de puissance est purement électrique.

En marche avant, une rotation vers la gauche du volant (7) selon la flèche G provoque une variation de l'angle de braquage des roues selon la flèche Gr de la figure 3. Conformément à l'invention, lorsque le véhicule est en marche arrière, ce que le calculateur (10) peut par exemple détecter en fonction de signaux en provenance du levier de vitesse (17), le calculateur (10) assure une inversion des commandes de direction. Bien entendu, la détection du fonctionnement en marche arrière peut résulter d'autres signaux, et par exemple des signaux élaborés au sein du calculateur assurant la gestion de la loi de commande de la transmission.

Plus précisément, lorsque le conducteur effectue une rotation vers la gauche G du volant (7), l'angle de braquage des roues (14, 15) évolue en provoquant un braquage vers la droite, selon la flèche Dr. Cette situation correspond au braquage opposé commandé lorsque le véhicule est en marche avant.

Cette inversion peut s'effectuer de différentes manières. Ainsi, le calculateur peut comporter un module élaborant un signal inversé à partir du signal (9) issu du capteur (8) représentatif de la rotation du volant. Ce signal adapté est ensuite fourni à la loi, de calcul qui génère alors des signaux de puissance provoquant le braquage des roues dans le sens opposé. Le calculateur peut utiliser des lois de commande différentes selon que le véhicule est en marche avant ou en marche arrière, de manière à adapter un facteur de démultiplication par exemple.

Dans d'autres variantes de réalisations, le calculateur peut également assurer une interversion des circuits de puissance venant commander l'actionneur (12). Parmi de nombreuses solutions possibles, on peut prévoir par exemple l'utilisation de 4 valves de by-pass. Dans ce cas, chaque entrée de vérin est dotée d'un té avec les 2 arrivées de puissance correspondant aux deux chambres. Chacune des arrivées est dotée d'une valve by-pass : on procède à l'inversion de la puissance en actionnant les valves de by-pass adéquates.

Ainsi, en pratique, lorsque le conducteur se trouve dans le poste de conduite et en marche arrière, lorsqu'il tourne le volant (7) dans le sens de la flèche D, il provoque une commande qui le rapproche de la zone arborée (6) qu'il observe sur son écran (3), alors que dans un véhicule traditionnel, non équipé de l'invention, cette rotation du volant dans le même sens, aurait provoqué un rapprochement du véhicule du côté de la route présentant l'habitation (16).

Il ressort de ce qui précède que le système de commande de direction conforme à l'invention présente l'avantage majeur de déplacer virtuellement le poste de conduite à l'arrière du véhicule, et donc de faciliter les manoeuvres sur un plan ergonomique.

## Revendications

1. Véhicule automobile (1) équipé d'un système de commande de direction comportant :
• un organe de commande de direction (7), du type volant ou manipulateur,
• un actionneur (12) agissant sur l'angle de braquage des roues directrices (14, 15),
• des moyens pour commander (10) ledit actionneur (12) en fonction d'un signal (9) issu dudit organe de commande de direction (7),
■ au niveau du poste de conduite, des moyens (3) de visualisation en mode direct du champ de vision arrière du véhicule ;
■ des moyens (10) de détermination du sens de marche du véhicule ;
**caractérisé en ce qu'**il comporte :
■ des moyens pour inverser, selon le sens de marche du véhicule, le sens de braquage des roues (14, 15) pour un même sens de déplacement de l'organe de commande de direction (7).

2. Véhicule automobile selon la revendication 1, **caractérisé en ce que** les moyens pour commander l'actionneur (12), agissant sur l'angle de braquage, incluent un circuit hydraulique, ou électro-hydraulique, ou électrique.

3. Véhicule automobile selon la revendication 1, **caractérisé en ce que** les moyens pour commander l'actionneur, agissant sur l'angle de braquage, incluent un calculateur (10).

4. Véhicule automobile selon la revendication 3, **caractérisé en ce que** les moyens d'inversion du sens de braquage selon le sens de marche du véhicule agissent sur la configuration des circuits électriques ou électro-hydrauliques commandés par le calculateur (10).

5. Véhicule automobile selon la revendication 3, **caractérisé en ce que** les moyens d'inversion agissent sur le signal (9) issu de l'organe de commande de direction (7) et acheminé au calculateur (10) en vue de la commande des circuits électriques ou électro-hydrauliques.

## Patentansprüche

1. Kraftfahrzeug (1), das mit einem Lenksteuersystem ausgestattet ist, welches umfasst:
• ein Lenkorgan (7) von der Art eines Lenkrads oder Manipulators,
• ein Stellorgan (12), das auf den Einschlagwinkel der Vorderräder (14, 15) einwirkt,
• Mittel (10), um das Stellorgan (12) in Abhängigkeit von einem Signal (9) zu steuern, das von dem Lenkorgan (7) kommt,
• auf der Ebene des Führerstands Mittel (3) zur Sichtbarmachung des hinteren Sichtfelds des Fahrzeugs im Direktmodus,
• Mittel (10) zur Feststellung der Fahrtrichtung des Fahrzeugs,
**dadurch gekennzeichnet, dass** es aufweist:
• Mittel, um je nach Fahrtrichtung des Fahrzeugs die Einschlagrichtung der Räder (14, 15) bei gleicher Bewegungsrichtung des Lenkorgans (7) umzukehren.

2. Kraftfahrzeug nach Anspruch 1, **dadurch gekennzeichnet, dass** die Mittel zur Steuerung des auf den Einschlagwinkel einwirkenden Stellorgans (12) einen hydraulischen oder elektrohydraulischen oder elektrischen Kreis umfassen.

3. Kraftfahrzeug nach Anspruch 1, **dadurch gekennzeichnet, dass** die Mittel zur Steuerung des auf den Einschlagwinkel einwirkenden Stellorgans einen Rechner (10) umfassen.

4. Kraftfahrzeug nach Anspruch 3, **dadurch gekennzeichnet, dass** die Mittel zur Umkehr der Einschlagrichtung je nach Fahrtrichtung des Fahrzeugs auf die Konfiguration der von dem Rechner (10) gesteuerten elektrischen oder elektrohydraulischen Kreise einwirken.

5. Kraftfahrzeug nach Anspruch 3, **dadurch gekennzeichnet, dass** die Umkehrmittel auf das Signal (9) einwirken, das von dem Lenkorgan (7) kommt und zwecks Steuerung der elektrischen oder elektrohydraulischen Kreise an den Rechner (10) weitergeleitet wird.

## Claims

1. A motor vehicle (1) fitted with a steering control system comprising:
• a steering control unit (7) of the steering wheel or manipulator type,
• an actuator (12) that acts on the steering lock angle of the leading wheels (14, 15),
• means of controlling (10) said actuator (12) as a function of a signal (9) output by said steering control unit (7),
• in the driver's immediate environment, means of display (3) in direct mode of the field of vision behind the vehicle,
• means of determining (10) the direction in which the vehicle is moving,
**characterised in that** it comprises:
means of reversing, depending on the direction in which the vehicle is moving, the direction of steering lock of wheels (14, 15) by moving steering control unit (7) in a single direction.

2. A motor vehicle as claimed in claim 1, **characterised in that** means of controlling actuator (12) that acts on the steering lock angle includes a hydraulic, electrohydraulic or electric system.

3. A motor vehicle as claimed in claim 1, **characterised in that** the means of controlling the actuator that acts on the steering lock angle includes a computer (10).

4. A motor vehicle as claimed in claim 3, **characterised in that** the means of reversing the direction of the steering lock depending on the direction in which the vehicle is moving acts on the configuration of the electric or electrohydraulic systems controlled by computer (10).

5. A motor vehicle as claimed in claim 3, **characterised in that** the means of reversing acts on the signal (9) output by the steering control unit (7) and routed to the computer (10) with a view to controlling the electric or electrohydraulic systems.
